# EUROPÄISCHE PATENTSCHRIFT

(11) **EP 1 230 092 B1**
(45) Veröffentlichungstag und Bekanntmachung des Hinweises auf die Patenterteilung: **14.04.2004**
(21) Anmeldenummer: 00967573.7
(22) Anmeldetag: 14.09.2000
(51) Int. Cl.: B41M 1/00

(54) **VERFAHREN ZUM AUFBRINGEN VON FARBIGEN INFORMATIONEN AUF EINEN GEGENSTAND**
METHOD FOR APPLYING COLOURED INFORMATION ON AN OBJECT
PROCEDE POUR APPLIQUER DES INFORMATIONS EN COULEUR SUR UN OBJET

(30) Priorität: 18.11.1999 DE 19955383
(43) Veröffentlichungstag der Anmeldung: 14.08.2002
(73) Patentinhaber: Orga Kartensysteme GmbH, 33104 Paderborn (DE)
(72) Erfinder: FANNASCH, Lothar, 33647 Bielefeld (DE); FISCHER, Dirk, 33106 Paderborn (DE); HENNEMEYER-SCHWENKER, Michael, 33165 Herbram (DE)
(86) Internationale Anmeldenummer: PCT/DE2000/003188
(87) Internationale Veröffentlichungsnummer: WO 2001/036208

(56) Entgegenhaltungen:
- EP-A- 0 538 044
- WO-A-96/35585
- WO-A-97/21550

## Beschreibung

Die Erfindung bezieht sich auf ein Verfahren zum Aufbringen von farbigen Informationen auf einen Gegenstand. Für diese Art von Verfahren weist der Gegenstand zumindest in einer oberflächennahen Schicht mindestens zwei verschiedenartige farbgebende Partikel auf. die unter dem Einfluß von Laserstrahlung die Farbe dieser Schicht verändern. Dabei wird Laserstrahlung mit mindestens zwei verschiedenen Wellenlängen (λ₁,λ₂,λ₃) verwendet, um die Farbe dieser Schicht zu ändern. Die Beaufschlagung des Gegenstandes mit Laserstrahlung erfolgt im Vektor- und/oder Rasterverfahren über eine Zweikoordinaten-Strahlablenkeinrichtung und eine Fokussiereinrichtung. Dabei fokussiert die Fokussiereinrichtung die Laserstrahlung auf die Schicht des Gegenstandes, die die farbgebenden Partikel enthält. Dabei erfolgt jeweils lokal (im Laserfokus) an den für die farbige Information vorgesehenen Stellen des Gegenstandes eine Farbänderung.

Aus der DE 30 48 736 C2 ist es bekannt, Kunststoffkarten mittels Laserstrahlung zu beschriften, wobei die Kunststoffkarten zumindest in einer oberflächennahen Schicht zum Zwecke dieser Beschriftung spezielle Laseradditive als farbgebende Partikel enthalten. Ein Beispiel für so ein Laseradditiv ist das Laseradditiv mit der Markenbezeichnung Iriodin LS 825 der Fa. Merck. Dieses Pigment ist an sich transparent bis hellgrau. Infolge der Beaufschlagung dieses Laseradditivs mit Laserstrahlung von 1064 nm (Nd-YAG-Laser) wird in dem Kunststoff eine intensive, irreversible farbändernde Reaktion ausgelöst. Die Reaktion bewirkt in der Regel hauptsächlich eine Dunkelfärbung (Schwarzfärbung) des Kunststoffs, hervorgerufen durch eine Karbonisierung der Kunststoffpolymermatrix. Das Laseradditiv bewirkt dabei eine zur Karbonisierung notwendige Absorption der Laserstrahlung, wobei Laseradditive verwendet werden, deren Absorption auf eine entsprechende Laserwellenlänge abgestimmt ist.

Darüber hinaus ist es bekannt, sogenannte latente Pigmente als farbgebende Partikel einzusetzen, die an sich zumindest nahezu transparent sind. Bei Beaufschlagung mit Laserstrahlung wird die Absorptionseigenschaft des latenten Pigments allerdings derart geändert, daß das Pigment nach der Laserbestrahlung eine Absorption im sichtbaren Spektralbereich aufweist, wodurch eine Farbänderung der Schicht, in der sich dieses Pigment befindet, hervorgerufen wird.

Ferner ist aus der WO 96/35585 ein Verfahren zum Aufbringen von farbigen Information bekannt, bei dem drei verschiedene Pigmente als farbgebende Partikel eingesetzt werden, die jeweils zumindest an einer Stelle (für eine bestimmte Wellenlänge oder Wellenlängenbereich) im sichtbaren Spektralbereich (400 nm bis 700 nm) Licht absorbieren. Bei Bestrahlung mit intensiver Laserstrahlung mit einer bestimmten Wellenlänge, vorzugsweise die Wellenlänge, wo die Absorption des Pigments am stärksten ist, verlieren diese Pigmente ihre Absorptionseigenschaft zumindest teilweise. Sie lassen sich so zumindest teilweise Bleichen. Durch wellenlängenselektives Bleichen mittels Laserstrahlung kann so lokal eine Farbeinstellung erfolgen.

Idealerweise weist die Schicht, auf die die farbige Information aufzubringen ist, folgende Pigmente (Farbmittel) auf:
- ein erstes Pigment, das schwerpunktmäßig blaues Licht (440 nm) absorbiert - die Eigenfarbe dieses Pigments ist gelb,
- ein zweites Pigment, das schwerpunktmäßig grünes Licht (532 nm) absorbiert - die Eigenfarbe dieses Pigments ist rot (magenta),
- ein drittes Pigment, das schwerpunktmäßig rotes Licht (660 nm) absorbiert - die Eigenfarbe dieses Pigments ist blau (cyan).

Sind diese Pigmente in einer Schicht in nahezu gleicher Konzentration gleich verteilt vorhanden, so erscheint diese Schicht bei Betrachtung im Sonnenlicht schwarz. Durch wellenlängenselektives Ausbleichen mittels Laserstrahlung der einzelnen Pigmente kann man so durch subtraktive Farbmischung die Farbe der Schicht gezielt einstellen. Wenn man z.B. die Schicht an einer Stelle mit Laserstrahlung von 440 nm bestrahlt und das erste Pigment vollständig ausbleicht, so erhält man eine Schicht, die blaues Licht nicht mehr absorbiert, sondern nur noch grünes und rotes Licht. Dementsprechend ist dann auch der Farbeindruck dieser Stelle.

Um mit Hilfe dieses Verfahrens die Farbe in einem weiten Bereich einstellen zu können, ist es erford erlich, die entsprechende Schicht des Gegenstandes mit Laserstrahlung verschiedener Wellenlänge zu beaufschlagen.

Hierzu wird in der WO 96/35585 vorgeschlagen, einen durchstimmbaren Laser zu verwenden, der in der Lage ist, Laserstrahlung unterschiedlicher Wellenlänge zu erzeugen. Die Beaufschlagung des Gegenstandes mit Laserstrahlung erfolgt im Vektor- und/oder Rasterverfahren über eine Zweikoordinaten-Strahlablenkeinrichtung und eine Fokussiereinrichtung. Dabei fokussiert die Fokussiereinrichtung die Laserstrahlung auf die Schicht des Gegenstandes, die die farbgebenden Partikel enthält. Ein Problem hierbei ist jedoch, daß die Intensität von durchstimmbaren Lasern oftmals zu gering ist. Außerdem ist der Betriebszustand von durchstimmbaren Lasern oft nicht stabil, da diese Laser sehr empfindlich von äußeren Bedingungen abhängen. Ein Dauerbetrieb unter Produktionsbedingungen ist mit einem durchstimmbaren Laser nicht zu erreichen.

Ferner wird in der WO 96/35585 vorgeschlagen, zum Aufbringen von farbigen Informationen auf einen Gegenstand drei verschiedene Laseranlagen zu verwenden - für jede Wellenlänge eine Laseranlage. Dabei wird in einem ersten Verfahrensschritt das erste Pigment gebleicht. Anschließend muß der Gegenstand weitertransportiert werden zur zweiten Laseranlage, wo dann das zweite Pigment gebleicht wird usw. Hiermit sind jedoch einige Nachteile verbunden. Zum einen ist der Transport des Gegenstandes von einer Laseranlage zur nächsten aufwendig und zeitintensiv. Darüber hinaus muß der Gegenstand in jeder Laseranlage neu positioniert werden, was sehr schwierig ist, da die Positioniergenauigkeit durch die Größe der Bildpunkte (ca. 50 bis 100 µm) der aufzubringenden Information gegeben ist. Zum anderen erfordert jede Laseranlage eine eigene Zweikoordinaten-Strahlablenlceinrichtung und eine zugehörige Fokussiereinrichtung, um die Beaufschlagung des Gegenstandes im Vektor- und/oder Rasterverfahren ausführen zu können.

Aufgabe der Erfindung ist es, ein Verfahren zum Aufbringen von farbigen Informationen auf einen Gegenstand mittels Laserstrahlung verschiedener Wellenlänge zu schaffen, das einfach, zuverlässig und schnell durchzuführen ist.

Diese Aufgabe wird erfindungsgemäß durch die kennzeichnenden Merkmale des Patentanspruchs 1 gelöst. Die sich daran anschließenden Unteransprüche enthalten vorteilhafte Ausführungsformen des Verfahrens.

Erfindungsgemäß ist mindestens ein Strahlführungsmittel vorgesehen, um einen ersten Laserstrahl mit der Wellenlänge (λ₁) und mindestens einen weiteren Laserstrahl mit einer Wellenlänge (λ₂), die von der Wellenlänge des ersten Laserstrahls verschieden ist, über die Zweikoordinaten-Strahlablenkeinrichtung und die Fokussiereinrichtung auf die Schicht des Gegenstandes zu führen, in der sich die farbgebenden Partikel befinden.

Das erfindungsgemäße Verfahren hat gegenüber der Verwendung eines durchstimmbaren Lasers den Vorteil, daß für jede Laser-wellenlänge zur Erzeugung der Laserstrahlung eine eigene stabile, leistungsstarke Laserstrahlquelle verwendet werden kann. Über die erfindungsgemäß vorgesehenen Strahlführungsmittel werden die aufgrund ihres unterschiedlichen Erzeugungsortes räumlich voneinander getrennt verlaufenden Laserstrahlen unterschiedlicher Wellenlänge über die eine Zweikoordinaten-Strahlablenkeimichtung und die eine Fokussiereinrichtung auf die Schicht des zu beschriftenden Gegenstandes gerichtet.

Das erfindungsgemäße Verfahren hat gegenüber der Verwendung von drei verschiedenen Laseranlagen den Vorteil, daß der Gegenstand nicht für die Beaufschlagung mit Laserstrahlung verschiedener Wellenlänge von einer Laseranlage zur nächsten transportiert werden muß. Handhabungssysteme für den Weitertransport des Gegenstandes von einer Laseranlage zur nächsten entfallen. Außerdem wird durch den Wegfall des Transports Zeit eingespart. Insbesondere gibt es keine Positionierprobleme aufgrund des Weitertransports.

Anhand der beigefügten Zeichnungen soll die Erfindung nachfolgend weiter erläutert werden. Es zeigt:
- Figur 1: ein reales Absorptionsdiagramm für eine Schicht, in der sich verschiedene mittels Laserstrahlung bleichbare, farbgebende Partikel befinden,

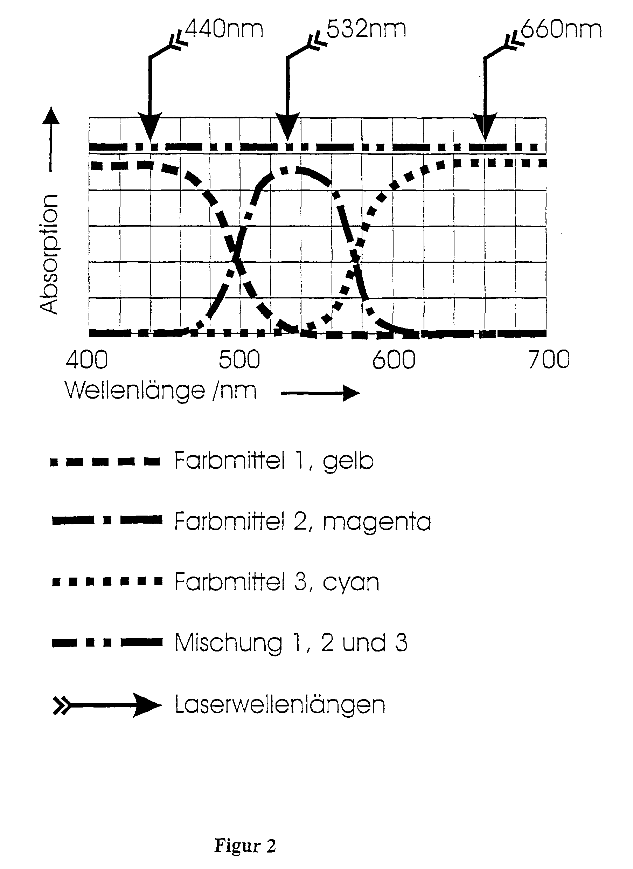

- Figur 2: ein idealisiertes Absorptionsdiagramm für eine Schicht, in der sich mittels Laserstrahlung bleichbare, farbgebende Partikel befinden,
- Figur 3 - Figur 5: Bleichdiagramme für drei verschiedene farbgebende Partikel,
- Figur 6: eine erste verfahrensgemäße Anordnung,
- Figur 7: den Strahlverlauf zweier fokussierter Laserstrahlen unterschiedlicher Wellenlänge im Bereich der zu beschriftenden Schicht,
- Figur 8: eine detaillierte Darstellung der ersten verfahrensgemäßen Anordnung,
- Figur 9: eine zweite verfahrensgemäße Anordnung,
- Figur 10: eine dritte verfahrensgemäße Anordnung,
- Figur 11: eine vierte verfahrensgemäße Anordnung,
- Figur 12: ein Linsensystem zur Kompensation der chromatischen Aberration der Fokussiereinrichtung parallel zur optischen Achse,
- Figur 13: eine fünfte verfahrensgemäße Anordnung,
- Figur 14: eine Darstellung zur Erläuterung des chromatischen Querfehlers der Fokussi ereinrichtung,
- Figur 15: eine Stufenindexfaser mit einer Linse hinter dem Auskoppelende der Faser,
- Figur 16: einen Schnitt durch eine Stufenindexfaser mit dem Verlauf des Brechungsindex,
- Figur 17: den Strahlverlauf eines Gaußförmigen Strahls vor dem Einkoppeln in eine Stufenindexfaser und nach dem Auskoppeln,
- Figur 18: eine Draufsicht auf die zu beschriftende Schicht des Gegenstandes mit den Bildpunkten,
- Figur 19: eine Tabelle mit Steuerdaten für das erfindungsgemäße Verfahren.

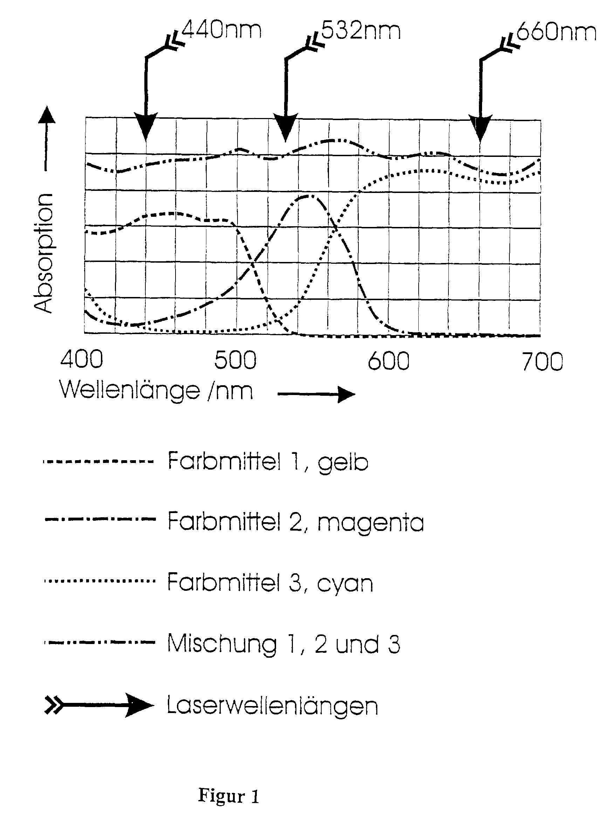

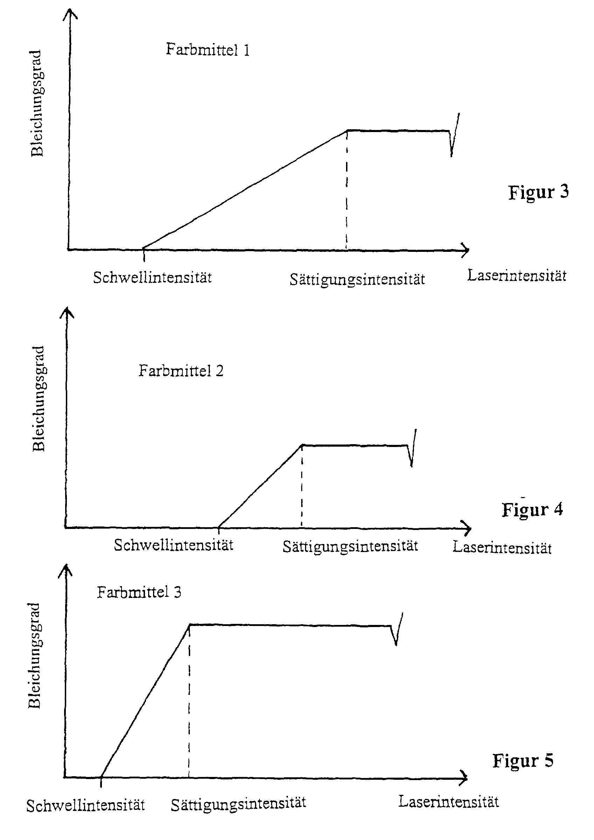

In **Figur 1** ist ein reales Absorptionsspektrum einer erfindungsgemäß zu beschriftenden Schicht eines Gegenstandes dargestellt. Unter Beschriftung wird im folgenden auch immer das Aufbringen von farbigen Informationen verstanden. In dieser Schicht sind drei farbgebende Partikel (auch Farbmittel genannt) enthalten, deren Absorptionsverhalten im sichtbaren Spektralbereich verschieden ist. Die Absorptionsbanden sind nicht ideal voneinander getrennt. In dem Bereich, wo hauptsächlich das Farbmittel 1 absorbiert, absorbieren auch die Farbmittel 2 und 3 - wenn auch erheblich geringer. In dem Bereich, wo hauptsächlich das Farbmittel 2 absorbiert, gibt es auch eine geringe Absorption für die Farbmittel 1 und 3. Lediglich in dem Bereich, wo hauptsächlich das Farbmittel 3 absorbiert, gibt es kaum eine Absorption der beiden anderen Farbmittel. Ein Beispiel für das Farbmittel 1 ist das Pigment mit dem Handelsnamen Novoperm Gelb HR 70 von der Fa. Clariant. Ein Beispiel für das Farbmittel 2 ist das Pigment mit dem Handelsnamen Hostaperm Rosa E von der Fa. Clariant. Ein Beispiel für das Farbmittel 3 ist das Pigment mit dem Handelsnamen Monastral Blau FGX von der Fa. Clariant. Diesen Pigmenten gemeinsam ist, daß sie sich unter dem Einfluß von Laserstrahlung bleichen lassen. Durch wellenlängenselektives Bleichen kann man so durch subtraktive Farbmischung die Farbe der Schicht einstellen. Jedes Flächenelement der Schicht weist statistisch gesehen eine Gleichverteilung der verschiedenen farbgebenden Partikel auf. Einerseits sind die Wellenlängen, die zum Bleichen der einzelnen Farbmittel eingesetzt werden, auf das Absorptionsspektrum angepaßt, anderseits werden die verwendeten Farbmittel und ihre Zusammensetzung danach ausgesucht, welche Laserwellenlängen am günstigsten zur Verfügung stehen. Die resultierende Farbe der Schicht hängt also davon ab, welche Farbmittel verwendet werden, mit welchen Laserwellenlängen und mit welcher Laserintensität jeweils gebleicht wird. Letzteres, die jeweilige Laserintensität, hat einen großen Einfluß auf den Bleichungsgrad. Dies wird in den **Figuren 3** bis 5 veranschaulicht, wo die Bleichungsdiagramme für drei verschiedene Farbmittel dargestellt sind. Die Abhängigkeit des Bleichungsgrads von der Laserintensität ist dabei für jedes Farbmittel anders. Diesem Umstand wird - wie weiter unten beschrieben wird - durch eine besondere Verfahrenssteuerung Rechnung getragen. Unterhalb einer Schwellintensität findet überhaupt keine Bleichung statt. Oberhalb dieser Schwellintensität gibt es einen in erster Näherung linearen Bereich, der dann in einen Sättigungsbereich übergeht. Ab einer bestimmten Laserintensität wird die Schicht dann zerstört.

Im obigen Beispiel wurden Laserstrahlen mit den folgenden Wellenlängen verwendet: 440 nm, 532 nm und 660 nm. Der Laserstrahl mit 532 nm wird mittels eines Nd-YAG-Lasers erzeugt, dessen Basiswellenlänge von 1064 nm durch Frequenzverdopplung halbiert wird. Der Laserstrahl mit 660 nm wird mittels eines Nd-YAG-Lasers erzeugt, dessen Basiswellenlänge von 1320 nm durch Frequenzverdopplung halbiert wird. Der Laserstrahl mit 440 nm wird mittels eines Nd-YAG-Lasers erzeugt, dessen Basiswellenlänge von 1320 nm durch Frequenzverdreifachung auf ein Drittel reduziert wird. Die Arten der Frequenzvervielfachung sind dem Fachmann bekannt. Diese Laserstrahlquellen laufen stabil und liefern eine ausreichende Leistung.

Das erfindungsgemäße Verfahren ist jedoch nicht auf die Verwendung von Laserstrahlen mit diesen Wellenlängen beschränkt. Das erfindungsgemäße Verfahren ist auch nicht auf die Methode des wellenlängenselektiven Bleichens beschränkt, sondern auch auf die Laserbestrahlung von latenten Pigmenten und/oder auf die Beschriftung mittels laserinduzierter Karbonisierung anwendbar. Dementsprechend sind die Laserwellenlängen zu wählen.

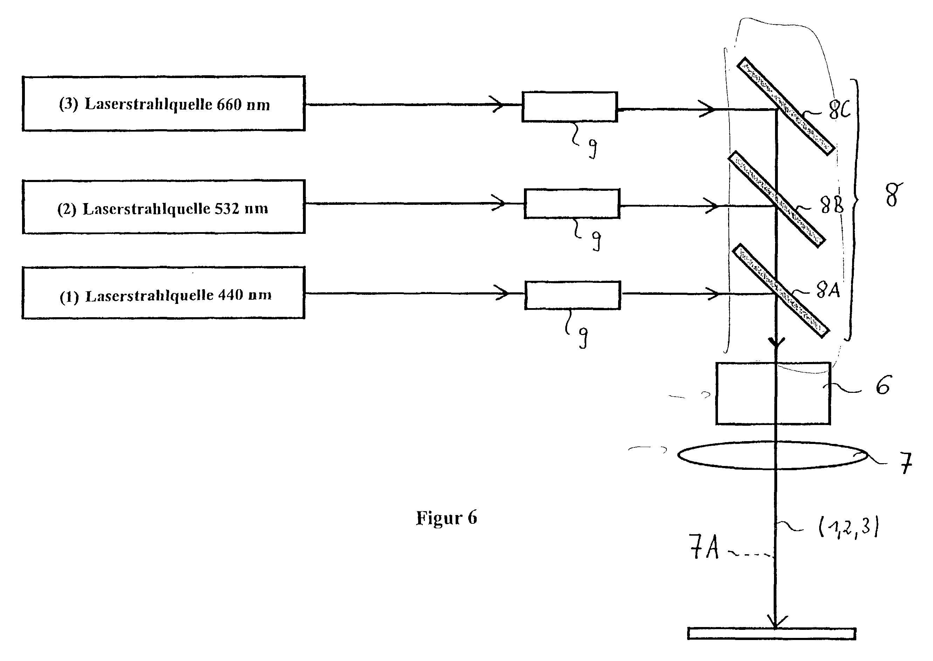

In **Figur 6** ist eine erste verfahrensgemäße Anordnung gezeigt. Das erfindungsgemäß vorgesehene Strahlführungsmittel (8) weist ein erstes optisch reflektierendes Element (8A) auf, das Laserstrahlung einer ersten Wellenlänge (λ₁) reflektiert und Laserstrahlung mit mindestens einer zweiten Wellenlänge (λ₂, λ₃) transmittiert, wobei
- der erste Laserstrahl (1) mit der Wellenlänge (λ₁) vom reflektierenden Element (8A) in Richtung auf die Zweikoordinaten-Strahlablenkeinrichtung (6) reflektiert wird,
- mindestens ein zweiter Laserstrahl (2) mit einer Wellenlänge (λ₂) durch das reflektierende Element (8A) hindurch auf die Zweikoordinaten-Strahlablenkeinrichtung (6) transmittiert wird.
Das optisch reflektierende Element (8A) ist ein dielektrischer Spiegel oder ein dielektrisches Reflexionsprisma (nicht dargestellt). Dielektrische Spiegel oder dielektrische Reflexionsprismen, die Strahlung einer bestimmten Wellenlänge oder eines bestimmten Wellenlängenbereichs reflektieren und ansonsten zumindest teilweise transparent sind, sind dem Fachmann bekannt. Auf diese Weise werden der 1. Laserstrahl mit einer Wellenlänge von 440 nm und ein 2. Laserstrahl mit einer Wellenlänge von 532 nm, die räumlich getrennt voneinander erzeugt werden, auf ein und dieselbe Zweikoordinaten-Strahlablenkeinrichtung (6) geführt. Dabei kann der 2. Laserstrahl direkt oder über ein weiteres reflektierendes Element (8B) - wie dargestellt - auf das erste reflektierende Element (8A) gerichtet sein. Der Reflexionswinkel in der dargestellten Ausführungsform beträgt 45⁰. Es sind jedoch auch andere Reflexionswinkel vorgesehen, wobei jeweils die Anordnung der Zweikoordinaten-Strahlablenkeinrichtung (6) und der Fokussiereinrichtung (7) mit Blick auf die relative Lage des reflektierenden Elements (8A) und mit Blick auf den Reflexionswinkel gewählt wird. Nach dem reflektierenden Element (8A) verlaufen die beiden Laserstrahlen (1,2) vorzugsweise entlang einer Linie. Falls ein 3. Laserstrahl mit einer Wellenlänge von 660 nm eingekoppelt werden soll, wird der 2. Laserstrahl vom zweiten reflektierenden Element (8B) in Richtung auf das erste reflektierende Element (8A) reflektiert und durch dieses hindurch auf die Zweikoordinaten-Strahlablenkeinrichtung (6) transmittiert. Der 3. Laserstrahl (3) mit einer Wellenlänge (λ₃) wird dann durch das erste und zweite reflektierende Element (8A,8B) hindurch auf die Zweikoordinaten-Strahlablenkeinrichtung (6) transmittiert. Für diesen Zweck sind das erste und das zweite reflektierende Element (8A, 8B) für die Wellenlänge des 3. Laserstrahls zumindest teilweise transparent. Dabei kann der 3. Laserstrahl direkt oder über ein weiteres reflektierendes Element (8C) - wie dargestellt - auf das zweite reflektierende Element (8B) gerichtet sein.

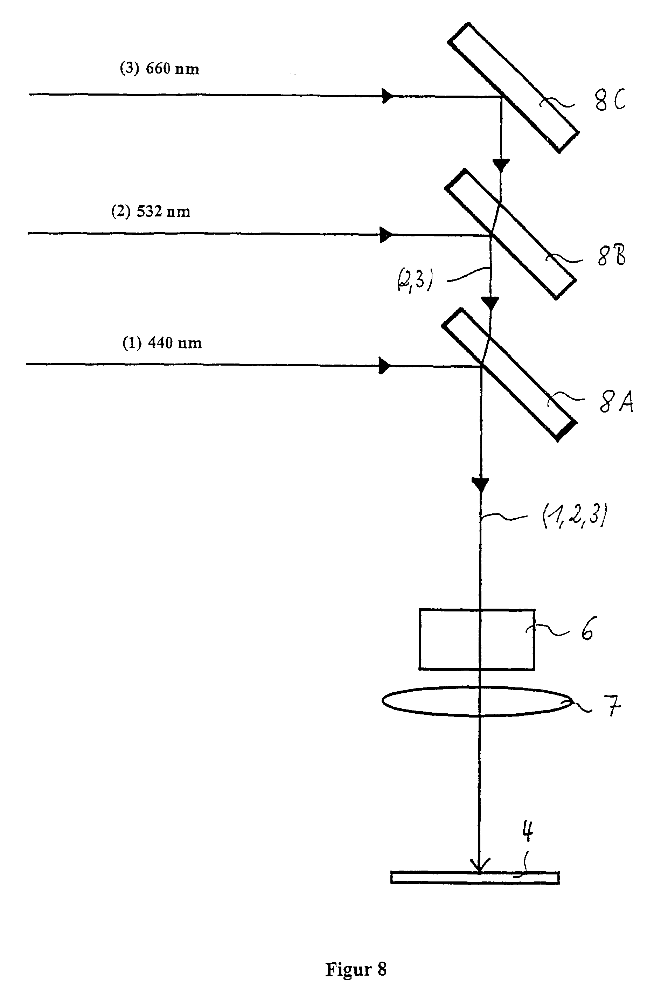

In **Figur 8** ist eine Detaildarstellung der ersten verfahrensgemäßen Anordnung gezeigt. Wie zu erkennen ist, erfahren die Laserstrahlen durch die reflektierenden Elemente (8A, 8B) einen Strahlversatz. Durch entsprechende Einstellung der Auftreffpunkte der Laserstrahlen auf die reflektierende Elemente wird diesem Strahlversatz Rechnung getragen, so daß die verschiedenen Laserstrahlen anschließend entlang einer Linie verlaufen. Die reflektierenden Elemente (8A, 8B, 8C) sind vorzugsweise in ihrer Lage verstellbar.

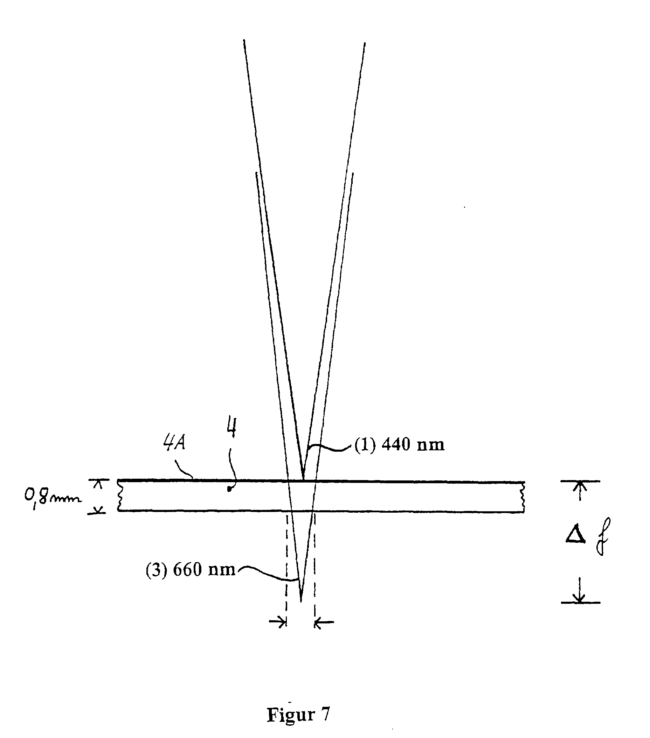

Anhand der **Figur 7** soll die chromatische Aberration der Fokussiereinrichtung (7) parallel zur optischen Achse (A) der Fokussiereinrichtung erläutert werden. Hierbei handelt es sich um ein grundsätzliches Problem, das auftaucht, wenn Laserstrahlen verschiedener Wellenlänge durch ein und dieselbe Fokussiereinrichtung (7) fokussiert werden sollen. Eine derartige Fokussiereinrichtung (7) ist eine Linse oder ein Linsensystem, vorzugsweise ein Planfeldobjektiv. Ein solches Planfeldobjektiv weist nun eine chromatische Aberration auf, die bei der Beaufschlagung des zu beschriftenden Gegenstandes (4) mit Laserstrahlung verschiedener Wellenlänge Probleme bereitet. Dabei versteht man unter chromatischer Aberration, daß Strahlen mit einer kleineren Wellenlänge stärker gebrochen werden als Strahlen mit einer größeren Wellenlänge. Dies hat zur Folge, daß die Brennweite (f) wellenlängenabhängig ist, wobei der Brennweitenunterschied zwischen einem blauen Laserstrahl (440 nm) und einem roten Laserstrahl (660 nm) durchaus 2 bis 3 mm betragen kann. Die Herstellerangaben für wellenlängenabhängige Brennweiten beziehen sich dabei immer auf Laserstrahlen mit gleicher Strahlcharakteristik (verschwindend geringe Divergenz und gleicher Strahldurchmesser) vor der Fokussierung. Die Dicke einer typischen Kunststoffkarte beträgt z.B. 0,8 mm. Der Brennweitenunterschied beträgt somit schon ein Vielfaches der Kartendicke, während die erfindungsgemäße Beschriftung in einer oberflächennahen Schicht (4A) stattfinden soll. In Figur 7 ist der Abstand der zu beschriftenden Fläche (4A) vom Planfeldobjektiv so gewählt, daß der Fokus für die Laserstrahlung mit der Wellenlänge von 440 nm auf der zu beschriftenden Fläche liegt. Dabei ist der Laserfleck im Fokus auch nicht beliebig klein, sondern besitzt beugungsbedingt eine endliche Größe (typischer Wert : 50 µm). Ohne weitere Maßnahmen liegt der Fokus für die Laserstrahlung mit der Wellenlänge von 660 nm dann 2 bis 3 mm unter der Kartenoberfläche (4A). Dies hat wiederum zur Folge, daß die Laserintensität für die Laserstrahlung mit der Wellenlänge 660 nm auf der Kartenoberfläche (4A) nicht hoch genug ist, um eine Farbänderung zu erreichen. 2 bis 3 mm oberhalb des Fokus ist der Strahldurchmesser ca. doppelt so groß wie im Fokus, damit beträgt die Intensität dort nur ein Viertel der Intensität im Fokus. Mit den meisten Laseradditiven ist ein Farbumschlag außerhalb des Fokus daher nicht zu erreichen, da dort die Laserintensität kleiner als die Schwellintensität ist.

Um dem vorstehend beschriebenen Problem der chromatischen Aberration zu begegnen, ist erfindungsgemäß im Strahlengang mindestens eines Laserstrahls mit der Wellenlänge (λ) vor der Fokussiereinrichtung (6) ein Mittel (9) zur Kompensation der chromatischen Aberration vorgesehen ist. Dieses Mittel (9) verändert die Strahlcharakteristik des bzw. der Laserstrahlen so, daß alle ihren Fokus im oberflächennahen Bereich (4A) des zu beschriftenden Gegenstandes haben. Folgende Vorgehensweise ist dabei vorgesehen: Der Abstand der zu beschriftenden Fläche (4A) vom Planfeldobjektiv (6) wird so gewählt, daß der grüne Laserstrahl mit der Wellenlänge von 532 nm ohne weitere Mittel seinen Fokus auf der zu beschriftenden Fläche (4A) hat. Damit dann auch die beiden anderen Laserstrahlen ihren Fokus dort haben, werden in ihren Strahlengang entsprechende optisch wirksame Mittel (9) eingesetzt. Welchen der Laserstrahlen (1,2,3) man nun für die Wahl des Planfeldobjektivs (6) und des Abstandes zur zu beschriftenden Fläche (4A) als Ausgangspunkt aussucht, ist von den konkreten Bedingungen abhängig. Für den oder die jeweils anderen Laserstrahlen (1,2,3) sind dann jedoch entsprechende Mittel (9) zur Kompensation der chromatischen Aberration notwendig. Es ist auch vorgesehen, für jeden Laserstrahl (1,2,3) ein Mittel (9) zur Kompensation der chromatischen Aberration vorzusehen.

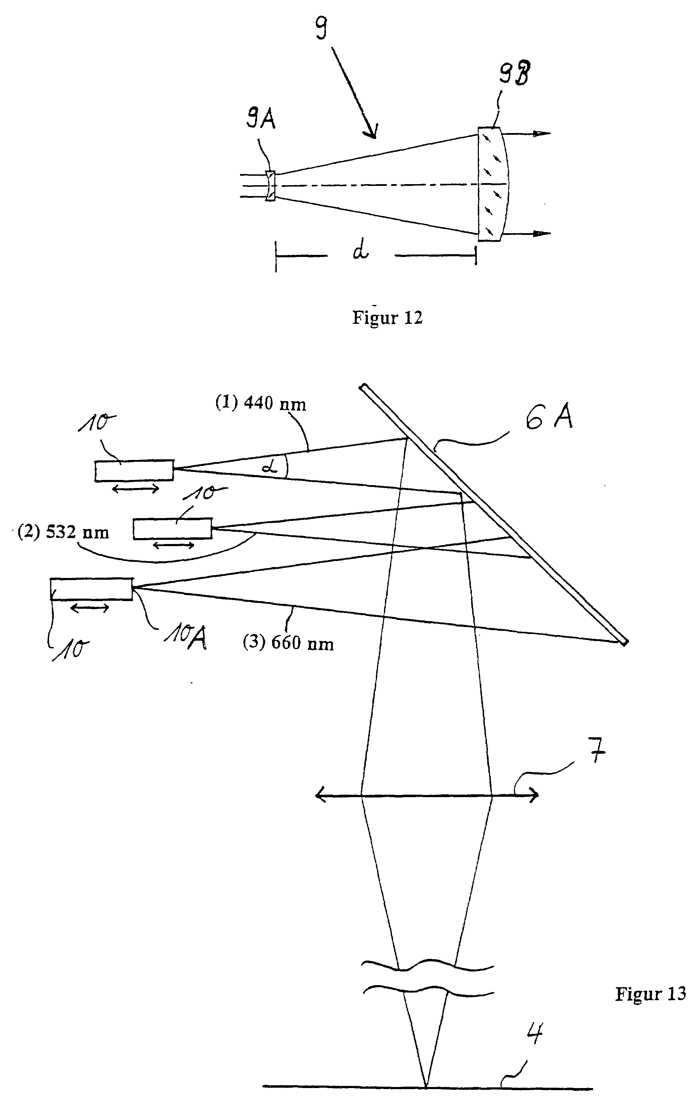

Das Mittel (9) zur Kompensation der chromatischen Aberration der Fokussiereinrichtung parallel zur optischen Achse (A) der Fokussiereinrichtung ist vorzugsweise von einer Linse oder einem Linsensystem gebildet. In **Figur 12** ist ein solches Linsensystem bestehend aus einer Zerstreuungslinse (9A) und einer Sammellinse (9B) gezeigt, wobei der Abstand (d) zwischen diesen beiden vorzugsweise verstellbar ist, um dem jeweiligen Laserstrahl (1,2,3) eine andere Divergenz zu geben. Dabei durchläuft der jeweilige Laserstrahl zuerst die Zerstreuungslinse (9A) und dann die Sammellinse (9B) bevor er weiter auf die Zweikoordinaten-Strahlablenkeinrichtung (6) und die Fokussiereinrichtung (7) geführt wird. So wird beispielsweise der blaue Laserstrahl (440 nm) in Richtung auf die Fokussiereinrichtung ein wenig aufgeweitet, während der rote Laserstrahl (660 nm)) in Richtung auf die Fokussiereinrichtung ein wenig gebündelt wird. Durch diese Maßnahme haben letztendlich alle drei Laserstrahlen (rot, grün und blau) ihren Fokus auf der zu beschriftenden Oberfläche (4A).

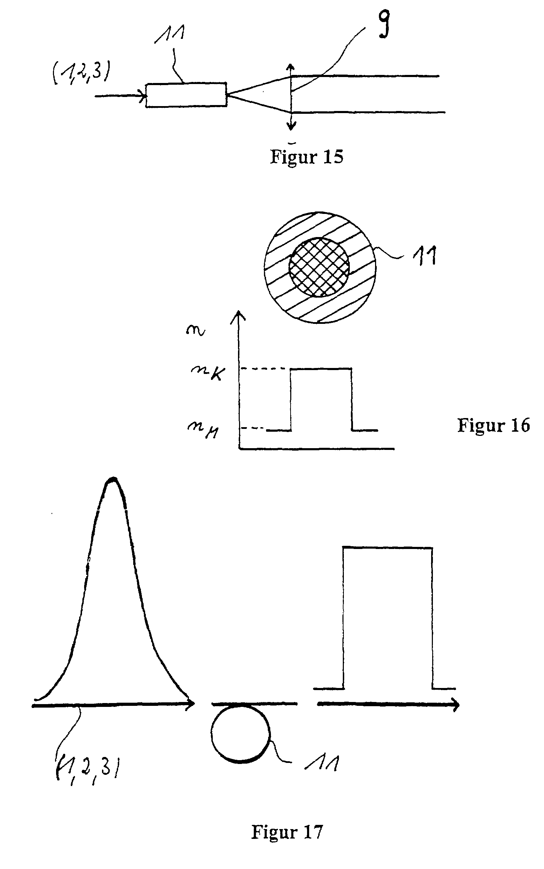

Das Mittel (9) zur Kompensation der chromatischen Aberration kann auch eine Glasfiber (11) und eine Sammellinse (9) sein (vgl. **Figur 15**). Dafür wird der entsprechende Laserstrahl, (1,2,3) für den eine Kompensation durchgeführt werden soll, durch eine Glasfiber (11) geleitet, durch die er dann divergent wieder heraustritt. Mittels der Sammellinse (9) kann er nun wieder gebündelt werden. Mit Variation des Abstandes zwischen dem Fiberende und der Sammellinse (9) wird auch die Lage des Fokus hinter der Fokussiereinrichtung (7) geändert.

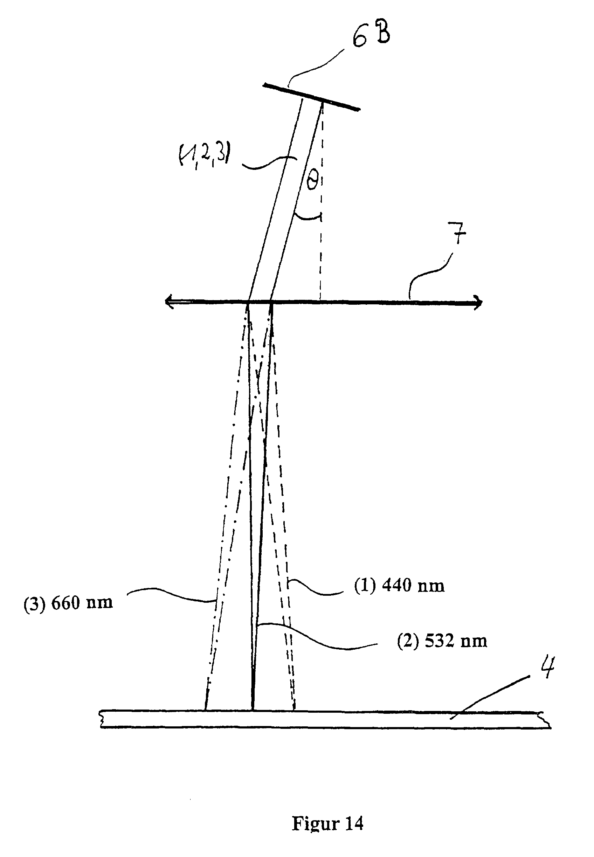

Zur Kompensation der chromatischen Aberration kann auch einfach der Abstand des Fiberendes (10A) zur Zweikoordinaten-Strahlablenkeinrichtung (6) jeweils eingestellt werden (vgl. **Figur 13**). Dort ist dargestellt, wie drei Laserstrahlen (1,2,3) verschiedener Wellenlänge jeweils über eine Glasfiber (10) auf einen Ablenkspiegel (6A) der Zweikoordinaten-Strahlablenkeinrichtung (6) gerichtet sind, wobei die Abstände der Fiberenden (10A) zum Ablenkspiegel (6A) unterschiedlich sind. Dadurch wird erreicht, daß alle Laserstrahlen trotz verschiedener Wellenlängen einen nahezu gemeinsamen Fokus auf der zu beschriftenden Fläche (4A) haben.

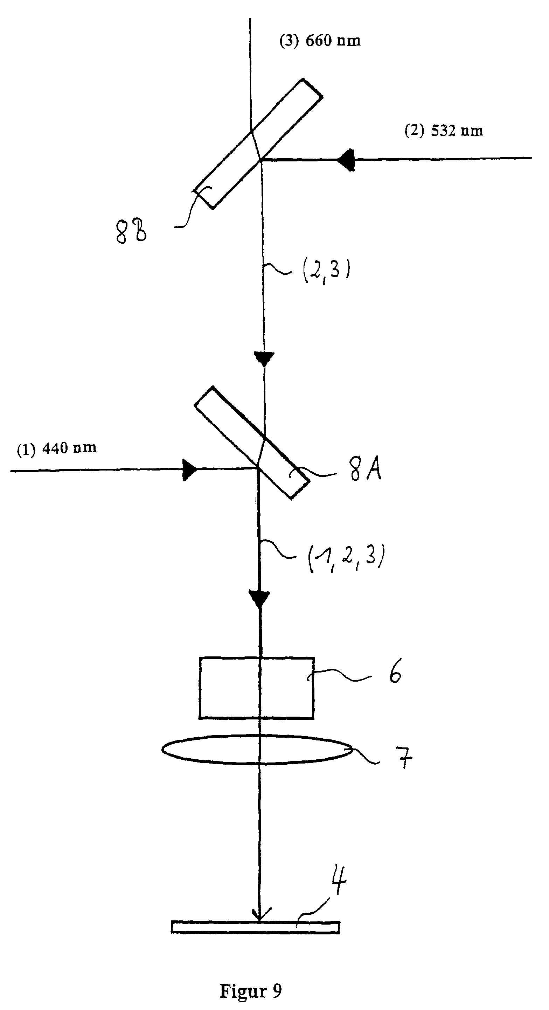

In **Figur 9** ist eine zweite verfahrensgemäße Anordnung gezeigt, bei der im Unterschied zu der Anordnung aus den Figuren 6 und 8 die drei Laserstrahlen nicht parallel zueinander auf die erfindungsgemäßen Strahlführunesmittel (8A, 8B, 8C) gerichtet sind. In der in Figur 9 dargestellten Anordnung verläuft einer der Laserstrahlen (3) ursprünglich senkrecht zu den beiden anderen Laserstrahlen (1,2), die ursprünglich parallel und versetzt zueinander verlaufen. Hier werden die gleichen dielektrischen Spiegel (8A, 8B) eingesetzt, die auch für die Anordnung gemäß Fig. 6 und 8 vorgesehen sind.

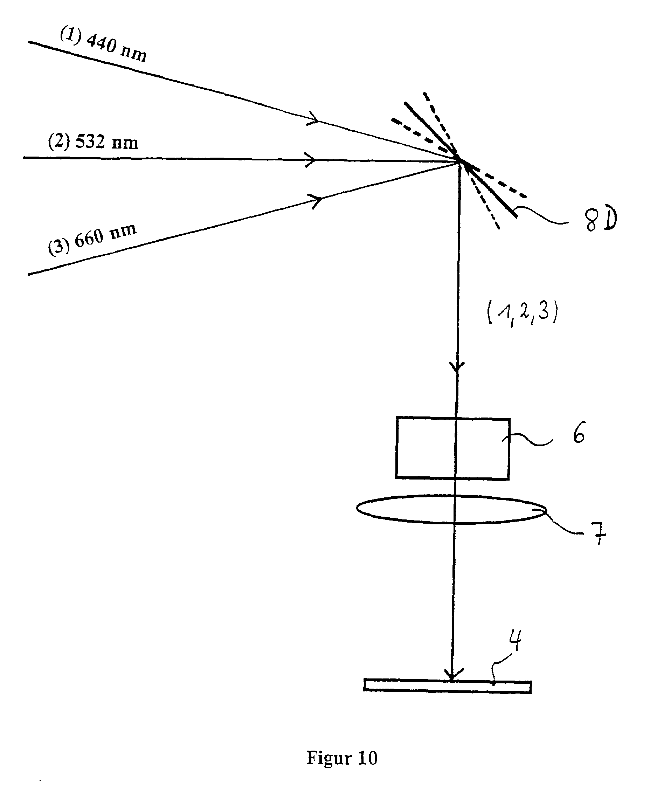

**Figur 10** zeigt eine vierte verfahrensgemäße Anordnung. Dabei weist das Strahlführungsmittel (8) ein in seiner Lage verstellbares, vorzugsweise drehbares optisch reflektierendes Element (8D) auf, das mindestens Laserstrahlung einer ersten Wellenlänge (λ₁) und Laserstrahlung einer zweiten Wellenlänge (λ₂, λ₃) reflektiert, wobei
- der erste Laserstrahl (1) mit der Wellenlänge (λ₁) und der zweite Laserstrahl (2) mit der Wellenlänge (λ₂) parallel versetzt zueinander und/oder unter verschiedenen Winkeln auf das reflektierende Element (8D) treffen,
- das reflektierende Element (8D) in eine erste Position gebracht wird, um den ersten Laserstrahl (1) mit der Wellenlänge (λ₁) in Richtung auf die Zweikoordinaten-Strahlablenkeinrichtung (6) zu reflektieren,
- das reflektierende Element (8D) in eine zweite Position gebracht wird, um den zweiten Laserstrahl (2) mit der Wellenlänge (λ₂) in Richtung auf die Zweikoordinaten-Strahlablenkeinrichtung (6) zu reflektieren.

Das reflektierende Element (8D) ist dabei ein metallischer Spiegel oder ein metallisch verspiegeltes Reflexionsprisma.

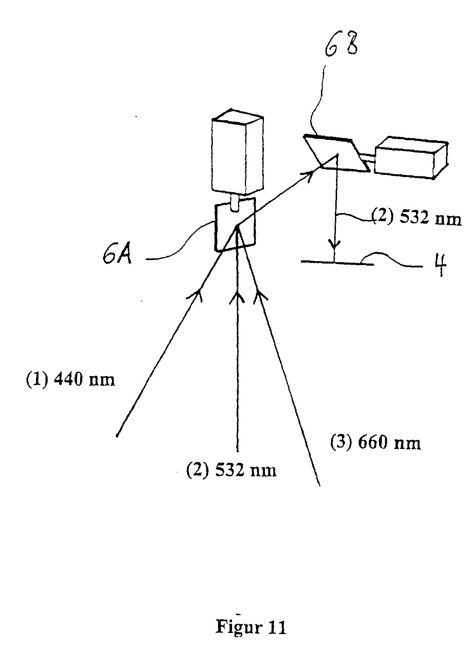

In **Figur 11** ist eine fünfte verfahrensgemäße Anordnung dargestellt. Dabei ist das Strahiführungsmittel (8) ein erster drehbarer, metallischer Ablenkspiegel (6A) der Zweikoordinaten-Strahlablenkeinrichtung (6), über den der erste Laserstrahl (1) mit der Wellenlänge (λ₁) und mindestens ein zweiter Laserstrahl (2) mit der Wellenlänge (λ₂) in Richtung auf einen zweiten drehbaren, metallischen Ablenkspiegel (6B) der Zweikoordinaten-Strahlablenkeinrichtung (6) reflektiert werden, der dann die Laserstrahlen in Richtung auf die Fokussiereinrichtung (7) zur Fokussierung der Laserstrahlung auf eine Schicht (4A) des Gegenstandes (4) reflektiert, wobei
- der Ablenkspiegel (6A) für die Beaufschlagung des Gegenstandes (4) mit dem ersten Laserstrahl (1) mit der Wellenlänge (λ₁) jeweils um einen ersten Offset-Wert gedreht wird,
- der Ablenkspiegel (6A) für die Beaufschlagung des Gegenstandes () mit dem zweiten Laserstrahl (2) mit der Wellenlänge (λ₂) jeweils um einen zweiten Offset-Wert gedreht wird.

In **Figur 14** ist ein weiteres grundsätzliches Problem veranschaulicht, das auftritt, wenn man Laserstrahlen verschiedener Wellenlängen durch ein und das selbe Planfeldobjektiv (7) zur Beschriftung auf die Oberfläche (4A) eines Gegenstandes, z.B. eine Kunststoffkarte, fokussieren will. Dieses Problem liegt in der chromatischen Aberration des Planfeldobjektivs quer zur optischen Achse begründet. Darunter versteht man, daß Laserstrahlen unterschiedlicher Wellenlänge, die unter einem bestimmten Winkel (θ) zur optischen Achse (A) des Planfeldobjektivs (7) das Planfeldobjektiv durchlaufen, nicht - wie gewünscht - auf derselben Stelle der zu beschriftenden Fläche (4A) auftreffen, sondern seitlich gegeneinander versetzt sind. Insbesondere bei einer randseitigen Beschriftung des Gegenstandes (4), also relativ weit weg von der optischen Achse (A) des Planfeldobjektivs (A), ist der laterale Fokusversatz besonders groß. Erfindungsgemäß wird zur Kompensation der lateralen chromatischen Aberration der Fokussiereinrichtung (7) für mindestens einen Laserstrahl mit der Wellenlänge (λ) bei der Dreheinstellung der drehbaren, metallischen Ablenkspiegel (6A,6B) der Zweikoordinaten-Strahlablenkeinrichtung (6) für die Beaufschlagung einer Schicht (4A) des Gegenstandes (4) im Vektor- und/oder Rasterverfahren jeweils ein Korrekturwert (Δx, Δy) für den chromatischen Querfehler berücksichtigt.

Die aufzubringenden farbigen Informationen bestehen aus einer Vielzahl von Bildpunkten (P), wobei die Beaufschlagung des Gegenstandes (4) mit Laserstrahlung zur Erzeugung der Bildpunkte (P) im Pulsbetrieb erfolgt. Zur Erzeugung der einzelnen farbigen Bildpunkte (P) sind erfindungsgemäß verschiedene Vorgehensweisen vorgesehen.

Dabei kann die punktweise Beaufschlagung des Gegenstandes (4) mit dem ersten Laserstrahl ( 1 ) mit einem ersten Laserintensitätswert (I⁽¹⁾) erfolgen , während die punktweise Beaufschlagung des Gegenstandes (4) mit dem zweiten Laserstrahl (2) mit einem zweiten Laserintensitätswert (I⁽²⁾) und die punktweise Beaufschlagung des Gegenstandes (4) mit dem dritten Laserstrahl (3) mit einem dritten Laserintensitätswert (I⁽³⁾) erfolgt. Es ist auch vorgesehen, bei der punktweisen Beaufschlagung des Gegenstandes (4) für mindestens einen Laserstrahl (1,2,3) auch die Laserintensität von Bildpunkt zu Bildpunkt zu variieren.

Eine Vorgehensweise zur erfindungsgemäßen Bilderzeugung besteht darin, zunächst sämtliche der im Vektor- und/oder Rasterverfahren zu erzeugenden Bildpunkte jeweils nacheinander mit dem ersten Laserstrahl (1) zu beaufschlagen, danach dann die Bildpunkte (P) jeweils nacheinander mit mindestens einem zweiten Laserstrahl (2) zu beaufschlagen.

Alternativ dazu erfolgt Bildpunkt für Bildpunkt jeweils nacheinander eine Beaufschlagung mit Laserstrahlen unterschiedlicher Wellenlänge.

Darüber hinaus ist es auch vorgesehen, daß Bildpunkt für Bildpunkt jeweils gleichzeitig eine Beaufschlagung mit Laserstrahlen unterschiedlicher Wellenlänge erfolgt.

Vorzugsweise erfolgt die Beaufschlagung des Gegenstandes (4) mit Laserstrahlung so, daß Bildpunkt für Bildpunkt jeweils ein Korrekturwert für den chromatischen Querfehler berücksichtigt wird.

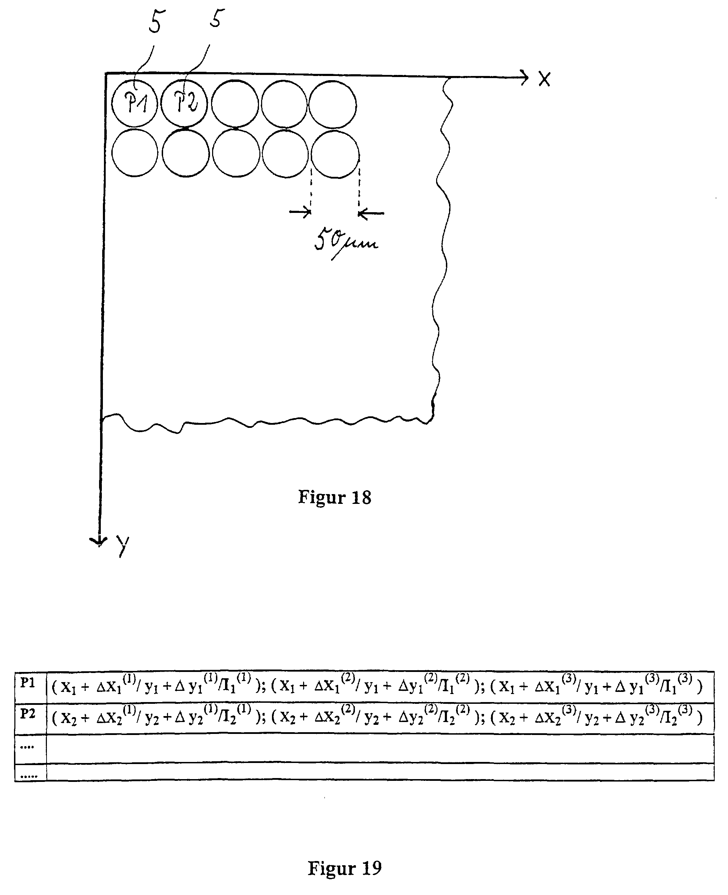

Ausgangspunkt für das erfindungsgemäße Verfahren ist ein Bild, das in digitaler Form (z.B. im sogenannten PCX-Format) vorliegt oder in ein solches umgewandelt wird. Dabei wird unter Bild sowohl ein Photo als auch alphanumerische Information, ein Barcode oder ähnliches verstanden. Ausgehend von diesen digitalen Bildinformationen werden dann für jeden Bildpunkt (P1, P2,..) die x, y- Koordinaten (x₁,y₁,x₂,y₂) zur Ansteuerung der Zweikoordinaten-Strahlablenkeinrichtung (6) abgeleitet. Außerdem werden anhand der digitalen Farbinformation über die Bildpunkte für jeden Bildpunkt Laserintensitätswerte (I₁⁽¹⁾, I₁⁽²⁾, ...) abgeleitet, damit der richtige Bleichungsgrad und damit der richtige Farbeindruck eines Bildpunktes erzielt wird. Darüber hinaus wird für jeden Bildpunkt (x,y) ein Korrekturwert (Δx, Δy) zur Kompensation der lateralen chromatischen Aberration generiert. Alle diese Daten können z.B. in einer Tabelle mit Steuerdaten für das erfindungsgemäße Verfahren hinterlegt sein (vgl. **Figur 19**).

Abschließend soll noch auf eine weitere Problematik eingegangen werden, die insbesondere beim sogenannten Laserbleichen von Bedeutung ist. Wie aus den Figuren 3 bis 5 zu entnehmen ist, hängt der Grad der Bleichung stark von der jeweiligen Laserintensität ab. Nun ist es jedoch so, daß die verwendeten Laserstrahlen (1,2,3) in der Regel ein Gaußförmiges Strahlprofil (vgl. Figur 17) aufweisen, das auch im Fokus (Laserschreibfleck) vorhanden ist. Das bedeutet jedoch, daß die Laserintensität im Laserschreibfleck nicht konstant ist. In der Strahlmitte ist sie sehr hoch, während sie zu den Rändern hin stark abnimmt. Damit kann ein einheitliches Bleichen eines Bildpunktes nicht erreicht werden. Im ungünstigsten Fall ist die Intensität an den Rändern der Bildpunkte kleiner als der Schwellwert, so daß dort überhaupt kein Bleichen stattfindet. Um diese Problematik zu umgehen, werden die Laserstrahlen (1,2,3) erfindungsgemäß in eine sogenannte Stufenindexfaser (11) eingekoppelt. In **Figur 16** ist ein Schnitt durch eine Stufenindexfaser (11) sowie der rechteckförmige Verlauf des Brechungsindexes dargestellt. Ein in die Stufenindexfaser (11) eingekoppelter Laserstrahl mit Gaußförmigen Profil hat, nachdem er die Stufenindexfiber (11) wieder verlassen hat, eine rechteckförmige Intensitätsverteilung über seinen Querschnitt. Das Strahlprofil des Lasers ist somit quasi ein Abbild vom Verlauf des Brechungsindexes der Stufenindexfiber. Auf diese Weise wird ein Laserstrahl mit einer über seinen Querschnitt nahezu konstanten Intensität zur Verfügung gestellt, der sich hervorragend für ein gleichmäßiges Bleichen von Bildpunkten eignet.

### Bezugszeichenliste

- 1): erster Laserstrahl
- 2): zweiter Laserstrahl
- 3): dritter Laserstrahl
- 4): Gegenstand
- 4A): Schicht des Gegenstandes, die die farbgebenden Partikel enthält
- 5): Bildpunkt
- 6): Zweikoordinaten-Strahlablenkeinrichtung
- 6A): erster Ablenkspiegel der Zweikoordinaten-Strahlablenkeinrichtung
- 6B): zweiter Ablenkspiegel der Zweikoordinaten-Strahlablenkeinrichtung
- 7): Fokussiereinrichtung
- 7A): optische Achse der Fokussiereinrichtung
- 8): Strahlführungsmittel
- 8A): erstes reflektierendes Element des Strahlführungsmittels
- 8B): zweites reflektierendes Element des Strahlführungsmittels
- 8C): drittes reflektierendes Element des Strahlführungsmittels
- 8D): drehbares, reflektierendes Element des Strahlführungsmittels
- 9): Linsensystem zur Kompensation der chromatischen Aberration der Fokussiereinrichtung parallel zur optischen Achse
- 9A): Zerstreuungslinse
- 9B): Sammellinse
- 10): Faser
- 10A): Auskoppelende der Faser
- 11): Stufenindexfaser

## Patentansprüche

1. Verfahren zum Aufbringen von farbigen Informationen auf einen Gegenstand (4), wobei der Gegenstand zumindest in einer oberflächennahen Schicht (4A) mindestens zwei verschiedenartige farbgebende Partikel aufweist, die unter dem Einfluß von Laserstrahlung die Farbe dieser Schicht (4a) verändern, wobei
- Laserstrahlung (1,2,3) mit mindestens zwei verschiedenen Wellenlängen (λ₁,λ₂,λ₃) verwendet wird, um die Farbe dieser Schicht (4A) zu ändern,
- die Beaufschlagung des Gegenstandes (4) mit Laserstrahlung im Vektor- und/oder Rasterverfahren über eine Zweikoordinaten-Strahlablenkeinrichtung (6) und eine Fokussiereinrichtung (7) zur Fokussierung der Laserstrahlung auf die Schicht (4A) des Gegenstandes (4) erfolgt,
**dadurch gekennzeichnet, daß**
mindestens ein Strahlführungsmittel (8) benutzt wird, um einen ersten Laserstrahl (1) mit einer ersten Wellenlänge (λ₁) und mindestens einen weiteren Laserstrahl (2) mit einer zweiten Wellenlänge (λ₂), die von der Wellenlänge des ersten Laserstrahls verschieden ist, über die Zweikoordinaten-Strahlablenkeinrichtung (6) und die Fokussiereinrichtung (7) auf die Schicht (4A) des Gegenstandes (4) zu führen.

2. Verfahren nach Anspruch 1,
**dadurch gekennzeichnet, daß**
das Strahlführungsmittel (8) mindestens ein erstes optisch reflektierendes Element (8A) aufweist, das Laserstrahlung einer ersten Wellenlänge (λ₁) reflektiert und Laserstrahlung mit mindestens einer zweiten Wellenlänge (λ₂, λ₃) transmittiert, wobei
- der erste Laserstrahl (1) mit der Wellenlänge (λ₁) vom reflektierenden Element (8A) in Richtung auf die Zweikoordinaten-Strahlablenkeinrichtung (6) reflektiert wird,
- mindestens ein zweiter Laserstrahl (2) mit einer Wellenlänge (λ₂) durch das reflektierende Element (8A) hindurch auf die Zweikoordinaten-Strahlablenkeinrichtung (6) transmittiert wird.

3. Verfahren nach Anspruch 2,
**dadurch gekennzeichnet, daß**
ein zweites optisch reflektierendes Element (8B) vorgesehen ist, das Laserstrahlung der Wellenlänge (λ₂) reflektiert und Laserstrahlung mit mindestens einer anderen Wellenlänge (λ₃) transmittiert, wobei
- der erste Laserstrahl (1) mit der Wellenlänge (λ₁) vom ersten reflektierenden Element (8A) in Richtung auf die Zweikoordinaten-Strahlablenkeinrichtung (6) reflektiert wird,
- ein zweiter Laserstrahl (2) mit einer Wellenlänge (λ₂) vom zweiten reflektierenden Element (8B) in Richtung auf das erste reflektierende Element (8A) reflektiert und durch dieses hindurch auf die Zweikoordinaten-Strahlablenkeinrichtung (6) transmittiert wird,
- ein dritter Laserstrahl (3) mit einer Wellenlänge (λ₃) durch das erste und zweite reflektierende Element (8A, 8B) hindurch auf die Zweikoordinaten-Strahlablenkeinrichtung (6) transmittiert wird.

4. Verfahren nach Anspruch 2 oder 3,
**dadurch gekennzeichnet, daß**
das optisch reflektierende Element (8A, 8B) ein dielektrischer Spiegel ist.

5. Verfahren nach Anspruch 2 oder 3,
**dadurch gekennzeichnet, daß**
das optisch reflektierende Element (8A, 8B) ein dielektrisches Reflexionsprisma ist.

6. Verfahren nach Anspruch 1,
**dadurch gekennzeichnet, daß**
das Strahlführungsmittel (8) ein in seiner Lage verstellbares, vorzugsweise drehbares optisch reflektierendes Element (8D) ist, das mindestens Laserstrahlung einer ersten Wellenlänge (λ₁) und Laserstrahlung einer zweiten Wellenlänge (λ₂, λ₃) reflektiert, wobei
- der erste Laserstrahl (1) mit der Wellenlänge (λ₁) und der zweite Laserstrahl (2) mit der Wellenlänge (λ₂) parallel versetzt zueinander und/oder unter verschiedenen Winkeln auf das reflektierende Element (8D) treffen,
- das reflektierende Element (8D) in eine erste Position gebracht wird, um den ersten Laserstrahl (1) mit der Wellenlänge (λ₁) in Richtung auf die Zweikoordinaten-Strahlablenkeinrichtung (6) zu reflektieren,
- das reflektierende Element (8D) in eine zweite Position gebracht wird, um den zweiten Laserstrahl (2) mit der Wellenlänge (λ₂) in Richtung auf die Zweilcoordinaten-Strahlablenkeinrichtung (6) zu reflektieren.

7. Verfahren nach Anspruch 6,
**dadurch gekennzeichnet, daß**
das optisch reflektierende Element (8D) ein metallischer Spiegel ist.

8. Verfahren nach Anspruch 6,
**dadurch gekennzeichnet, daß**
das optisch reflektierende Element (8D) ein metallisches Reflexionsprisma ist.

9. Verfahren nach Anspruch 1,
**dadurch gekennzeichnet, daß**
das Strahlführungsmittel (8) ein erster drehbarer, metallischer Ablenkspiegel (6A) der Zweikoordinaten-Strahlablenkeinrichtung (6) ist, über den der erste Laserstrahl (1) mit der Wellenlänge (λ₁) und mindestens ein zweiter Laserstrahl (2) mit der Wellenlänge (λ₂) in Richtung auf einen zweiten drehbaren, metallischen Ablenkspiegel (6B) der Zweikoordinaten-Strahlablenkeinrichtung (6) reflektiert werden, der dann die Laserstrahlen in Richtung auf die Fokussiereinrichtung (7) zur Fokussierung der Laserstrahlung auf eine Schicht (4A) des Gegenstandes (4) reflektiert, wobei
- der Ablenkspiegel (6A) für die Beaufschlagung des Gegenstandes (4) mit dem ersten Laserstrahl (1) mit der Wellenlänge (λ₁) jeweils um einen ersten Offset-Wert gedreht wird,
- der Ablenkspiegel (6A) für die Beaufschlagung des Gegenstandes (4) mit dem zweiten Laserstrahl (2) mit der Wellenlänge (λ₂) jeweils um einen zweiten Offset-Wert gedreht wird.

10. Verfahren nach einem der vorstehenden Ansprüche,
**dadurch gekennzeichnet, daß**
die Fokussiereinrichtung (7) zur Fokussierung der Laserstrahlung auf eine Schicht (4A) des Gegenstandes (4) eine Linse oder ein Linsensystem, vorzugsweise ein Planfeldobjektiv, ist.

11. Verfahren nach einem der vorstehenden Ansprüche,
**dadurch gekennzeichnet, daß**
im Strahlengang mindestens eines Laserstrahls mit der Wellenlänge (λ) vor der Fokussiereinrichtung (7) zur Fokussierung der Laserstrahlung auf eine Schicht (4A) des Gegenstandes (4) ein Mittel (9,10) zur Kompensation der chromatischen Aberration der Fokussiereinrichtung (7) parallel zur optischen Achse der Fokussiereinrichtung vorgesehen ist.

12. Verfahren nach Anspruch 11,
**dadurch gekennzeichnet, daß**
die Mittel (9,10) zur Kompensation der chromatischen Aberration der Fokussiereinrichtung parallel zur optischen Achse eine im Strahlengang verstellbare Linse oder ein verstellbares Linsensystem (9A, 9B) umfassen.

13. Verfahren nach Anspruch 11,
**dadurch gekennzeichnet, daß**
zur Kompensation der chromatischen Aberration der Fokussiereinrichtung parallel zur optischen Achse (A) im Strahlengang mindestens eines Laserstrahls mit der Wellenlänge (λ) eine Faseroptik (10,11) vorgesehen ist, durch die hindurch der Laserstrahl geführt wird, wobei der optische Weg zwischen dem Auskoppelende (10A) der Faser und der Fokussiereinrichtung (7) einstellbar ist.

14. Verfahren nach einem der vorstehenden Ansprüche,
**dadurch gekennzeichnet, daß**
zur Kompensation der chromatischen Aberration der Fokussiereinrichtung (7) quer zur optischen Achse (A) der Fokussiereinrichtung für mindestens einen Laserstrahl mit der Wellenlänge (λ) bei der Dreheinstellung der drehbaren, metallischen Ablenkspiegel (6A,6B) der Zweikoordinaten-Strahlablenkeinrichtung (6) für die Beaufschlagung einer Schicht (4A) des Gegenstandes (4) im Vektor- und/oder Rasterverfahren jeweils ein Korrekturwert (Δx,Δy) für den chromatischen Querfehler berücksichtigt wird.

15. Verfahren nach einem der vorstehenden Ansprüche,
**dadurch gekennzeichnet, daß**
für mindestens einen Laserstrahl mit der Wellenlänge (λ) eine Stufenindexfaser (11) im Strahlengang vor der Zweikoordinaten-Strahlablenkeinrichtung (6), vorgesehen ist, wobei der in die Stufenindexfaser (11) eingekoppelte Laserstrahl ein Gaußförmiges Strahlprofil aufweist und der aus der Stufenindexfaser (11) ausgekoppelte Laserstrahl ein rechteckförmiges Strahlprofil aufweist.

16. Verfahren nach einem der vorstehenden Ansprüche, wobei die aufzubringenden farbigen Informationen aus einer Vielzahl von Bildpunkten (P) bestehen und die Beaufschlagung des Gegenstandes (4) mit Laserstrahlung zur Erzeugung der Bildpunkte im Pulsbetrieb erfolgt,
**dadurch gekennzeichnet, daß**
- die Beaufschlagung des Gegenstandes (4) mit dem ersten Laserstrahl (1) mit der Wellenlänge (λ₁) mit einem ersten Laserintensitätswetrt (I⁽¹⁾) erfolgt,
- die Beaufschlagung des Gegenstandes () mit mindestens einem zweiten Laserstrahl (2) mit der Wellenlänge (λ₂) mit einem zweiten Laserintensitätswert (I⁽²⁾) erfolgt.

17. Verfahren nach Anspruch 16,
**dadurch gekennzeichnet, daß**
die Beaufschlagung des Gegenstandes (4) mit Laserstrahlung zur Erzeugung der Bildpunkte in der Weise erfolgt, daß für mindestens einen Laserstrahl der Wellenlänge (λ) die Laserintensität von Bildpunkt zu Bildpunkt variiert wird.

18. Verfahren nach einem der vorstehenden Ansprüche,
**dadurch gekennzeichnet, daß**
die Beaufschlagung des Gegenstandes (4) mit Laserstrahlung zur Erzeugung der Bildpunkte (P) in der Weise erfolgt, daß
- zunächst sämtliche der zu erzeugenden Bildpunkte jeweils nacheinander mit dem ersten Laserstrahl (1) mit der Wellenlänge (λ₁) im Vektor- und/oder Rasterverfahren beaufschlagt werden,
- dann die zu erzeugenden Bildpunkte (P) jeweils nacheinander mit mindestens einem zweiten Laserstrahl (2) mit der Wellenlänge (λ₂) im Vektor- und/oder Rasterverfahren beaufschlagt werden.

19. Verfahren nach einem der vorstehenden Ansprüche 1 bis 17,
**dadurch gekennzeichnet, daß**
die Beaufschlagung des Gegenstandes (4) mit Laserstrahlung zur Erzeugung der Bildpunkte in der Weise erfolgt, daß
Blickpunkt für Bildpunkt jeweils nacheinander eine Beaufschlagung mit Laserstrahlen unterschiedlicher Wellenlänge erfolgt.

20. Verfahren nach einem der vorstehenden Ansprüche 1 bis 17,
**dadurch gekennzeichnet, daß**
die Beaufschlagung des Gegenstandes (4) mit Laserstrahlung zur Erzeugung der Bildpunkte (P) in der Weise erfolgt, daß Bildpunkt für Bildpunkt jeweils gleichzeitig eine Beaufschlagung mit Laserstrahlen unterschiedlicher Wellenlänge erfolgt.

21. Verfahren nach einem der vorstehenden Ansprüche,
**dadurch gekennzeichnet, daß**
die Beaufschlagung des Gegenstandes (4) mit Laserstrahlung zur Erzeugung der Bildpunkte in der Weise erfolgt, daß Bildpunkt für Bildpunkt jeweils ein Korrekturwert für den chromatischen Querfehler berücksichtigt wird.

## Claims

1. Method for applying coloured information to an object (4), the object having at least in a surface-adjacent layer (4A) at least two different types of colour-generating particles that alter the colour of said layer (4a) under the influence of laser radiation, in which
- laser radiation (1, 2, 3) having at least two different wavelengths (λ₁, λ₂, λ₃) is used to alter the colour of said layer (4A),
- the object (4) is irradiated with laser radiation using the vector and/or raster method via a two-coordinate beam deflection device (6) and a focusing device (7) for focusing the laser radiation onto the layer (4A) of the object (4),
**characterized in that**
at least one beam-guiding means (8) is used to guide a first laser beam (1) having a first wavelength (λ₁) and at least one further laser beam (2) having a second wavelength (λ₂) that differs from the wavelength of the first laser beam via the two-coordinate beam deflection device (6) and the focusing device (7) onto the layer (4A) of the object (4).

2. Method according to Claim 1,
**characterized in that**
the beam-guiding means (8) has at least one optically reflecting element (8A) which reflects laser radiation of a first wavelength (λ₁) and transmits laser radiation having at least a second wavelength (λ₂, λ₃), in which
- the first laser beam (1) having the wavelength (λ₁) is reflected by the reflecting element (8A) in the direction of the two-coordinate beam deflection device (6),
- at least a second laser beam (2) having a wavelength (λ₂) is transmitted through the reflecting element (8A) onto the two-coordinate beam deflection device (6).

3. Method according to Claim 2,
**characterized in that**
a second optically reflecting element (8B) is provided which reflects laser radiation of the wavelength (λ₂) and transmits laser radiation having at least one other wavelength (λ₃), in which
- the first laser beam (1) having the wavelength (λ₁) is reflected by the first reflecting element (8A) in the direction of the two-coordinate beam deflection device (6),
- a second laser beam (2) having a wavelength (λ₂) is reflected by the second reflecting element (8B) in the direction of the first reflecting element (8A) and is transmitted through the latter onto the two-coordinate beam deflection device (6),
- a third laser beam (3) having a wavelength (λ₃) is transmitted through the first and second reflecting element (8A, 8B) onto the two-coordinate beam deflection device (6).

4. Method according to Claim 2 or 3,
**characterized in that**
the optically reflecting element (8A, 8B) is a dielectric mirror.

5. Method according to Claim 2 or 3,
**characterized in that**
the optically reflecting element (8A, 8B) is a dielectric reflection prism.

6. Method according to Claim 1,
**characterized in that**
the beam-guiding means (8) is an optically reflecting element (8D), the position of which can be adjusted, preferably rotated, and which reflects at least laser radiation of a first wavelength (λ₁) and laser radiation of a second wavelength (λ₂, λ₃), in which
- the first laser beam (1) having the wavelength (λ₁) and the second laser beam (2) having the wavelength (λ₂) are incident on the reflecting element (8D) in parallel with a mutual offset and/or at different angles,
- the reflecting element (8D) is brought into a first position in order to reflect the first laser beam (1) having the wavelength (λ₁) in the direction of the two-coordinate beam deflection device (6),
- the reflecting element (8D) is brought into a second position in order to reflect the second laser beam (2) having the wavelength (λ₂) in the direction of the two-coordinate beam deflection device (6).

7. Method according to Claim 6,
**characterized in that**
the optically reflecting element (8D) is a metallic mirror.

8. Method according to Claim 6,
**characterized in that**
the optically reflecting element (8D) is a metallic reflection prism.

9. Method according to Claim 1,
**characterized in that**
the beam-guiding means (8) is a first rotatable metallic deflecting mirror (6A) of the two-coordinate beam deflection device (6), by means of which mirror the first laser beam (1) having the wavelength (λ₁) and at least a second laser beam (2) having the wavelength (λ₂) are reflected in the direction of a second rotatable metallic deflecting mirror (6B) of the two-coordinate beam deflection device (6), which then reflects the laser beams in the direction of the focusing device (7) for focusing the laser radiation onto a layer (4A) of the object (4), in which
- in order to irradiate the object (4) with the first laser beam (1) having the wavelength (λ₁), the deflecting mirror (6A) is rotated by a first offset value in each case,
- in order to irradiate the object (4) with the second laser beam (2) having the wavelength (λ₂), the deflecting mirror (6A) is rotated by a second offset value in each case.

10. Method according to one of the preceding claims,
**characterized in that**
the focusing device (7) for focusing the laser radiation onto a layer (4A) of the object (4) is a lens or a lens system, preferably a flat-field lens.

11. Method according to one of the preceding claims,
**characterized in that**
a means (9, 10) for compensating the chromatic aberration of the focusing device (7) parallel to the optical axis of the focusing device is provided in the beam path of at least one laser beam having the wavelength (λ) in front of the focusing device (7) for focusing the laser radiation onto a layer (4A) of the object (4).

12. Method according to Claim 11,
**characterized in that**
the means (9, 10) for compensating the chromatic aberration of the focusing device parallel to the optical axis comprise a lens or lens system (9A, 9B) that can be adjusted in the beam path.

13. Method according to Claim 11,
**characterized in that**
in order to compensate the chromatic aberration of the focusing device parallel to the optical axis (A), an optical fibre (10, 11) is provided in the beam path of at least one laser beam having the wavelength (λ), through which optical fibre the laser beam is guided, the optical path being adjustable between the outcoupling end (10A) of the fibre and the focusing device (7).

14. Method according to one of the preceding claims,
**characterized in that**
for compensating the chromatic aberration of the focusing device (7) perpendicular to the optical axis (A) of the focusing device for at least one laser beam having the wavelength (λ), in each case a correction value (• x, • y) for the chromatic lateral error is taken into account for the rotation setting of the rotatable metallic deflecting mirror (6A, 6B) of the two-coordinate beam deflection device (6) for the irradiation of a layer (4A) of the object (4) using the vector and/or raster method.

15. Method according to one of the preceding claims,
**characterized in that**
for at least one laser beam having the wavelength (λ), a step index fibre (11) is provided in the beam path in front of the two-coordinate beam deflection device (6), the laser beam launched into the step index fibre (11) having a Gauss-shaped beam profile and the laser beam coupled out of the step index fibre (11) having a rectangular beam profile.

16. Method according to one of the preceding claims, in which the coloured information to be applied consists of a multiplicity of image points (P) and the object (4) is irradiated with laser radiation in pulsed mode in order to produce the image points,
**characterized in that**
- the irradiation of the object (4) with the first laser beam (1) having the wavelength (λ₁) is performed using a first laser intensity value (I⁽¹⁾),
- the irradiation of the object 0 with at least a second laser beam (2) having the wavelength (λ₂) is performed using a second laser intensity value (I⁽²⁾).

17. Method according to Claim 16,
**characterized in that**
the irradiation of the object (4) with laser radiation to produce the image points is performed in such a way that the laser intensity is varied from image point to image point for at least one laser beam of the wavelength (λ).

18. Method according to one of the preceding claims,
**characterized in that**
the object (4) is irradiated with laser radiation to produce the image points (P) in such a way that
- first all the image points to be produced are successively irradiated in each case with the first laser beam (1) having the wavelength (λ₁) using the vector and/or raster method,
- then the image points (P) to be produced are successively irradiated in each case with at least a second laser beam (2) having the wavelength (λ₂) using the vector and/or raster method.

19. Method according to one of the preceding Claims 1 to 17,
**characterized in that**
the object (4) is irradiated with laser radiation to produce the image points in such a way that viewpoint [sic] by image point, irradiation is successively performed with laser beams of different wavelengths in each case.

20. Method according to one of the preceding Claims 1 to 17,
**characterized in that**
the object (4) is irradiated with laser radiation to produce the image points (P) in such a way that image point by image point, irradiation is simultaneously performed with laser beams of different wavelengths in each case.

21. Method according to one of the preceding claims,
**characterized in that**
the object (4) is irradiated with laser radiation to produce the image points in such a way that image point by image point, a correction value for the chromatic lateral error is taken into account in each case.

## Revendications

1. Procédé pour l'application d'informations en couleurs sur un objet (4), ledit objet présentant, au moins, dans une couche (4A) proche de la surface, au moins deux différentes particules colorantes qui modifient la couleur de ladite couche (4A) sous l'influence d'un faisceau laser,
- un faisceau laser (1,2,3) à au moins deux longueurs d'ondes différentes (λ₁,λ₂,λ₃) étant utilisé pour modifier la couleur de ladite couche (4A),
- le traitement de l'objet (4) par le faisceau laser étant effectué selon le procédé vectoriel et / ou le procédé de tramage, par l'intermédiaire d'un dispositif de déviation à deux coordonnées (6) et d'un dispositif de focalisation (7) pour la focalisation du faisceau laser sur le couche 4A) de l'objet (4),
**caractérisé en ce que**
au moins un auxiliaire de guidage du faisceau (8) est utilisé pour guider sur la couche (4A) de l'objet (4) un premier faisceau laser (1) à une première longueur d'ondes (λ₁) et au moins un autre faisceau laser (2) à une deuxième longueur d'ondes (λ₂) différente de la longueur d'ondes du premier faisceau laser, par l'intermédiaire du dispositif de déviation du faisceau à deux coordonnées (6) et du dispositif de focalisation (7).

2. Procédé selon la revendication 1,
**caractérisé en ce que**
l'auxiliaire de guidage du faisceau (8) présente au moins un premier élément optique réfléchissant (8A) qui réfléchit le faisceau laser à une première longueur d'ondes (λ₁) et transmet un faisceau laser à une deuxième longueur d'ondes ((λ₂,λ₃),
- le premier faisceau laser (1) à la longueur d'ondes (λ₁) étant réfléchi, par l'élément réfléchissant (8A), en direction du dispositif de déviation de faisceau à deux coordonnées (6),
- au moins un deuxième faisceau laser (2) à une longueur d'ondes (λ₂) étant transmis au dispositif de déviation de faisceau à deux coordonnées (6), à travers l'élément réfléchissant (8a).

3. Procédé selon la revendication 1,
**caractérisé en ce que**
un deuxième élément optique réfléchissant (8A) est prévu, lequel réfléchit le faisceau laser à longueur d'ondes (λ₂) et transmet un faisceau laser à une autre longueur d'ondes (λ₃),
- le premier faisceau laser (1) avec la longueur d'ondes (λ₁) étant réfléchi du premier élément réfléchissant (8A) en direction du dispositif de déviation de faisceau à deux coordonnées (6),
- un deuxième faisceau laser (2) à une longueur d'ondes (λ₂) étant réfléchi du deuxième élément réfléchissant (8B) en direction du premier élément réfléchissant (8A) et transmis, à travers celui-ci, au dispositif de déviation de faisceau à deux coordonnées (6),
- un troisième faisceau laser (3) à une longueur d'ondes (λ₃) étant transmis, à travers le premier et le deuxième éléments réfléchissants (8A, 8B), au dispositif de déviation de faisceau à deux coordonnées (6).

4. Procédé selon la revendication 2 ou 3,
**caractérisé en ce que**
l'élément optique réfléchissant (8A, 8B) est un miroir à couches diélectriques.

5. Procédé selon la revendication 2 ou 3,
**caractérisé en ce que**
l'élément optique réfléchissant (8A, 8B) est un prisme à réflexion diélectrique.

6. Procédé selon la revendication 1,
**caractérisé en ce que**
l'auxiliaire de guidage du faisceau (8) est un élément réfléchissant (8D) à positionnement réglable, préférentiellement rotatif, qui réfléchit au moins un faisceau laser à une première longueur d'ondes (λ₁) et un faisceau laser à une deuxième longueur d'ondes (λ₂,λ₃),
- le premier faisceau laser (1) à la longueur d'ondes (λ₁) et le deuxième faisceau laser (2) à la longueur d'ondes (λ₂) étant décalés parallèlement par rapport l'un à l'autre et ou convergeant sur l'élément réfléchissant (8D) sous des angles différents,
- l'élément réfléchissant (8D) étant amené dans une première position pour réfléchir le premier faisceau laser (1) à la longueur d'ondes (λ₁) en direction du dispositif de déviation de faisceau à deux coordonnées (6),
- l'élément réfléchissant (8D) étant amené dans une deuxième position pour réfléchir le deuxième faisceau laser (2) à la longueur d'ondes (λ₂) en direction du dispositif de déviation de faisceau (6).

7. Procédé selon la revendication 2 ou 3,
**caractérisé en ce que**
l'élément optique réfléchissant (8D) est un miroir métallique.

8. Procédé selon la revendication 2 ou 3,
**caractérisé en ce que**
l'élément optique réfléchissant (8D) est un prisme à réflexion métallique.

9. Procédé selon la revendication 1,
**caractérisé en ce que**
l'auxiliaire de guidage du faisceau (8) est un miroir de déviation métallique (6A) du dispositif de déviation de faisceau à deux coordonnées (6), par l'intermédiaire duquel le premier faisceau laser (6A) à la longueur d'ondes (λ₁) et, au moins, un deuxième faisceau laser (2) à la longueur d'ondes (λ₂) sont réfléchis en direction d'un deuxième miroir de déviation métallique rotatif (6B) du dispositif de déviation de faisceau à deux coordonnées (6) qui réfléchit alors lesdits faisceaux laser en direction du dispositif de focalisation (7) pour focaliser le faisceau laser sur une couche (4A) de l'objet (4),
- le miroir de déviation (6A), pour le traitement de l'objet de l'objet (4) par le premier faisceau laser (1) à une longueur d'ondes (λ₁), étant tourné chaque fois d'une première valeur offset,
- le miroir de déviation (6A), pour le traitement de l'objet (4) par le deuxième faisceau laser (2) à une longueur d'ondes (λ₂), étant tourné chaque fois d'une deuxième valeur offset.

10. Procédé selon l'une des revendications précédentes,
**caractérisé en ce que**
le dispositif de focalisation (7) pour la focalisation du faisceau laser sur une couche (4A) de l'objet (4), est une lentille ou un système a lentilles, préférentiellement un objectif à champ plan.

11. Procédé selon l'une des revendications précédentes,
**caractérisé en ce que**,
dans la trajectoire d'au moins un faisceau laser à la longueur d'onde (λ), en amont du dispositif de focalisation (7) focalisant le faisceau laser sur une couche (4a) d'un objet (4), des auxiliaires de compensation (9, 10) est prévu pour la compensation de l'aberration chromatique du dispositif de focalisation (7), parallèlement à l'axe optique dudit dispositif de focalisation.

12. Procédé selon la revendication 11,
**caractérisé en ce que**
les auxiliaires (9, 10) de compensation de l'aberration chromatique du dispositif de focalisation comprennent, parallèlement à l'axe optique, une lentille ou un système à lentille (9A, 9B) réglable dans la trajectoire du faisceau.

13. Procédé selon la revendication 11,
**caractérisé en ce que**
pour la compensation de l'aberration chromatique du dispositif de focalisation, dans la trajectoire d'au moins un faisceau laser à la longueur d'ondes (λ), parallèlement à l'axe optique (A), une optique à fibres de verre (10, 11) est prévue, à travers laquelle le faisceau laser est guidé, la distance optique entre l'extrémité de sortie (10A) des fibres et le dispositif de focalisation (7) étant réglable.

14. Procédé selon l'une des revendications précédentes,
**caractérisé en ce que**
pour la compensation de l'aberration chromatique du dispositif de focalisation (7), transversalement par rapport à l'axe optique (A) du dispositif de focalisation pour au moins un faisceau laser à la longueur d'ondes (λ), lors du réglage de la rotation du miroir de déviation métallique, rotatif (6A, 6B) du dispositif de déviation du faisceau à deux coordonnées (6) une valeur de correction (Δx,Δy) du défaut transversal chromatique est respectivement prévu pour le traitement d'une couche (4A) de l'objet (4) selon le procédé vectoriel ou de tramage.

15. Procédé selon l'une des revendications précédentes,
**caractérisé en ce que**,
pour au moins un faisceau laser à la longueur d'onde (λ), une fibre optique à saut d'indice (11) est prévue dans la trajectoire du faisceau, en amont du dispositif de déviation de faisceau à deux coordonnées (6), le faisceau laser injecté dans la fibre optique à saut d'indice (11) présentant un profil de rayonnement gaussien et le faisceau laser sortant de la fibre optique à saut d'indice présentant un profil de rayonnement rectangulaire.

16. Procédé selon l'une des revendications précédentes, les informations en couleurs devant être appliquées étant composées d'un grand nombre de points d'image (P) et le traitement de l'objet (4) par le faisceau laser pour la génération des points d'image étant effectué en fonctionnement impulsionnel,
**caractérisé en ce que**
- le traitement de l'objet (4) par le premier faisceau laser (1) à la longueur d'ondes (λ₁) est effectué à une première valeur d'intensité laser (I^{(I)}),
- le traitement de l'objet (4) par au moins un deuxième faisceau laser (2) à la longueur d'ondes (λ₂) est effectué à une deuxième valeur d'intensité du rayon laser (I⁽²⁾).

17. Procédé selon la revendication 16,
**caractérisé en ce que**
le traitement de l'objet (4) par le faisceau laser pour la génération des points d'images s'effectue de sorte que, pour au moins un faisceau laser à la longueur d'ondes (λ), l'intensité du rayon laser varie d'un point d'image à l'autre.

18. Procédé selon l'une des revendications précédentes,
**caractérisé en ce que**
le traitement de l'objet (4) par le faisceau laser pour la génération de points d'images (P) s'effectue de sorte que
- tout d'abord, tous les points d'images à générer sont traités l'un après l'autre par le premier faisceau laser (1) à la longueur d'ondes (λ₁), selon le procédé vectoriel ou le procédé de tramage,
- les points d'images (P) à générer sont ensuite traités, l'un après l'autre, par au moins un deuxième faisceau laser (2) à la longueur d'ondes (λ₂), selon le procédé vectoriel ou le procédé de tramage.

19. Procédé selon l'une des revendications 1 à 17,
**caractérisé en ce que**
le traitement de l'objet (4) par le faisceau laser pour la génération de points d'images s'effectue de sorte que, point d'image par point d'image, chaque point d'image est traité successivement par des faisceaux laser de différentes longueurs d'ondes.

20. Procédé selon l'une des revendications 1 à 17,
**caractérisé en ce que**
le traitement de l'objet (4) par le faisceau laser pour la génération de points d'images s'effectue de sorte que, point d'image par point d'image, chaque point d'image est traité simultanément par des faisceaux laser de différentes longueurs d'ondes.

21. Procédé selon l'une des revendications précédentes,
**caractérisé en ce que**
le traitement de l'objet (4) par le faisceau laser pour la génération de points d'image s'effectue de sorte que, point d'image par point d'image, une valeur de correction est prise en considération pour un défaut chromatique transversal.
